# EUROPÄISCHE PATENTSCHRIFT

(11) **EP 0 743 485 B1**
(45) Veröffentlichungstag und Bekanntmachung des Hinweises auf die Patenterteilung: **06.10.1999**
(21) Anmeldenummer: 96105017.6
(22) Anmeldetag: 29.03.1996
(51) Int. Cl.: F17C 13/04, F17C 5/06

(54) **Vorrichtung zum Betanken von Gasflaschen eines gasbetriebenen Omnibusses**
Filling device for the gas bottles of a gas-operated omnibus
Dispositif de remplissage de bouteilles à gaz pour un autobus opérant au gaz

(30) Priorität: 17.05.1995 DE 19518036
(43) Veröffentlichungstag der Anmeldung: 20.11.1996
(73) Patentinhaber: DaimlerChrysler AG, 70567 Stuttgart (DE)
(72) Erfinder: Klemann, Willi, 76731 Wörth (DE); Oberkirch, Uwe, 71394 Kernen (DE); Atsu, Sirri, 70190 Stuttgart (DE)

(56) Entgegenhaltungen:
- EP-A- 0 629 809
- US-A- 4 749 384
- US-A- 5 479 966

## Beschreibung

Die Erfindung betrifft eine Vorrichtung zum Betanken von Gasflaschen eines gasbetriebenen Omnibusses nach der im Oberbegriff von Anspruch 1 näher definierten Art.

Die Erfindung ist insbesondere für Omnibusse in modernster Niederflurtechnik geeignet, deren Gastankanlage mit mehreren Gasflaschen auf dem Dach angeordnet ist. Hierzu sind mehrere, zusammengeschaltete Hochdruck-Gasflaschen vorgesehen.

Von den Gasflaschen führt eine Entnahmeleitung nach unten zu dem Antriebsmotor. Gleichzeitig dient die Entnahmeleitung auch als Befülleitung für die Gasflaschen, wozu in der kombinierten Füll- und Entnahmeleitung entsprechend ein Füllnippel vorgesehen ist.

Aus Sicherheitsvorschriften müssen die Gasflaschen mit Flaschenventilen versehen sein, die einen automatischen Durchflupmengenbegrenzer bzw. entsprechende Sperrglieder aufweisen, damit ein unkontrolliertes Ausströmen von Gas im Falle eines Rohrbruches verhindert wird.

Ein Problem dabei besteht jedoch darin, daß die Flaschenventile mit den Durchflußmengenbegrenzungsgliedern funktionsbedingt einen kleinen Querschnitt besitzen, wodurch die Betankungszeit negativ beeinflußt wird.

Der vorliegenden Erfindung liegt daher die Aufgabe zugrunde, eine Vorrichtung der eingangs erwähnten Art zu schaffen, durch die mit geringem Aufwand schnellere Betankungszeiten ermöglicht werden.

Erfindungsgemäß wird diese Aufgabe durch die im kennzeichnenden Teil von Anspruch 1 genannten Merkmale gelöst.

Dadurch, daß neben den Flaschenventilen mit ihren Durchflußmengenbegrenzungsgliedern nunmehr zusätzliche Flaschenventile vorgesehen sind, kann die Betankungszeit deutlich verkürzt werden. Da für diesen Zweck "normale" Ventile verwendet werden können, die lediglich mit Rückschlaggliedern zu versehen sind oder die als Rückschlagventile ausgebildet sind, damit kein Gas über diese Ventile aus den Gasflaschen ausströmt, können die Flaschenventile mit ihren Durchflußmengenbegrenzungsgliedern während des Tankvorganges umgangen werden. Dabei kann die Befüllung - je nach Wunsch - auch ausschließlich über diese Ventile erfolgen. Selbstverständlich ist es jedoch auch möglich, zusätzlich noch eine Befüllung der Gasflaschen - wie bisher - über die Flaschenventile mit den Durchflußmengenbegrenzungsgliedern vorzunehmen. In diesem Falle wird jede Flasche über beide Flaschenventile befüllt.

Die Gasflaschen können dabei in Serie oder parallel in der Befülleitung bzw. bei Vorhandensein einer zweiten Befülleitung zwischen den beiden Befülleitungen angeordnet sein.

Vorteilhafte Weiterbildungen und Ausgestaltungen der Erfindung ergeben sich aus den Unteransprüchen und aus den nachfolgend anhand der Zeichnung beschriebenen Ausführungsbeispielen.

Es zeigt:
- Fig. 1: einen Omnibus mit einer Tankanlage nach dem Stand der Technik,
- Fig. 2: eine Tankanlage mit mehreren Gasflaschen nach dem Stand der Technik,
- Fig. 3: einen Omnibus mit der erfindungsgemäßen Tankanlage,
- Fig. 4: eine erfindungsgemäße Gastankanlage mit einer Anordnung der Gasflaschen zwischen Befülleitung und Entnahmeleitung,
- Fig. 5: eine erfindungsgemäße Gastankanlage mit mehreren Gasflaschen, die in der Befülleitung parallel angeordnet sind.

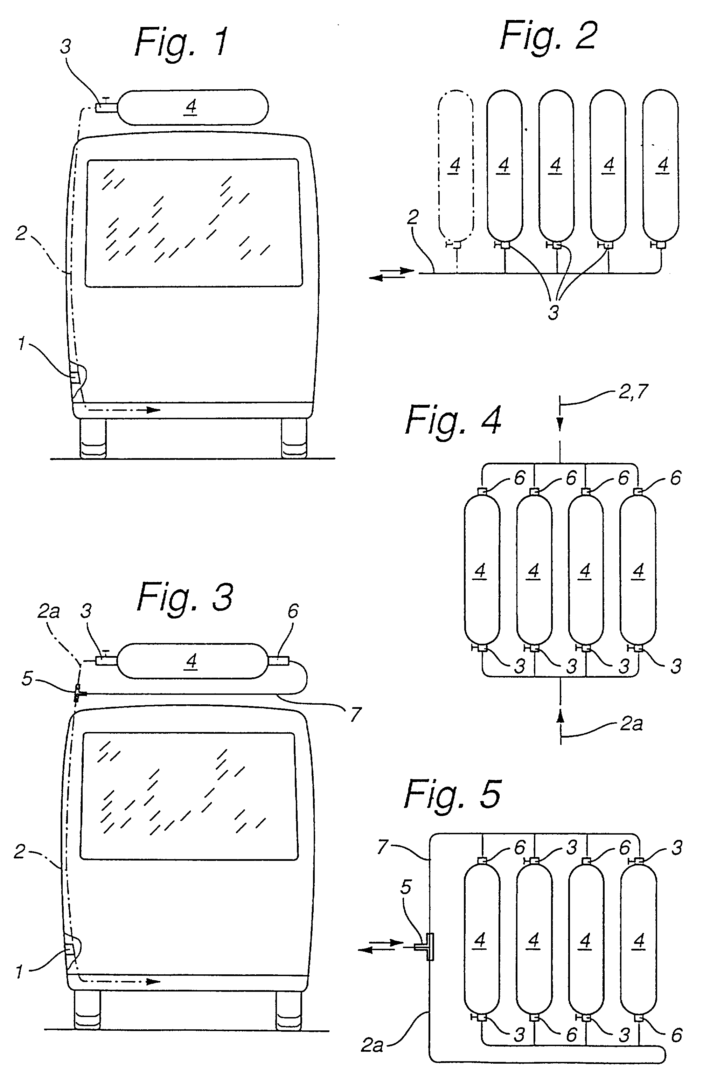

Gemäß Fig. 1 befindet sich ein Füllnippel 1 in einer gemeinsamen Befüll- und Entnahmeleitung 2. Die Befüll- und Entnahmeleitung führt gemäß Pfeildarstellung zu einem nicht dargestellten Motor.

Auf dem Dach des Fahrzeuges ist eine Gastankanlage mit mehreren Gasflaschen 4 angeordnet. Jede Gasflasche 4 ist eingangsseitig mit einem Flaschenventil 3 versehen. Jedes Flaschenventil besitzt einen automatischen Durchflußmengenbegrenzer, wodurch ein unkontrolliertes Ausströmen von Gas aus den Gasflaschen 4 bei einem Rohrbruch vermieden wird. Derartige Flaschenventile 3 sind in ihrem Aufbau allgemein bekannt, weshalb hier nicht näher darauf eingegangen wird.

Wie aus der Fig. 2 ersichtlich ist, sind die Gasflaschen 4 mit ihren Flaschenventilen 3 über entsprechende einzelne Zuleitungen mit der kombinierten Füll- und Entnahmeleitung 2 verbunden.

Gemäß Ausführungsform nach der Fig. 3 ist in der kombinierten Füll- und Entnahmeleitung 2 ein T-Stück 5 angeordnet, von dem aus ein neben der weiterführenden Befüll- und Entnahmeleitung 2a eine zweite Befülleitung 7 abzweigt.

Die zweite Befülleitung 7 kann ausschließlich zur Befüllung dienen, wozu sie über entsprechende Abzweigungen zu Flaschenventilen 6 führt, welche mit Rückschlaggliedern, wie z.B. Rückschlagklappen versehen sind, oder die als Rückschlagventile ausgebildet sind. Die Flaschenventile 6 sind dabei so im Strömungsweg angeordnet, daß sie bei einem entsprechenden Druck nur in Richtung auf eine Befüllung der Gasflaschen 4 geöffnet werden können, eine Gasentnahme durch diese Ventile jedoch unmöglich ist. Derartige Rückschlagventile sind ebenfalls allgemein bekannt, weshalb hier nicht näher darauf eingegangen wird.

Wenn die zweite Befülleitung 7 lediglich zum Befüllen vorgesehen ist (siehe Fig. 4), dann sind alle Gasflaschen 4 über die Rückschlagventile 6 mit dieser Befülleitung 7 verbunden, während sich die Flaschenventile 3, die zur Rohrbruchsicherung mit den Durchflußmengenbegrenzungsgliedern versehen sind, in der Befülleitung 2a befinden. In diesem Falle dient die Befülleitung 2a wiederum - wie in bekannter Weise - auch als Entnahmeleitung.

In der Fig. 3 ist diese Ausbildung ebenfalls grundsätzlich dargestellt. Es ist jedoch selbstverständlich auch möglich, statt einer zweiten Befülleitung 7 eine eigene gemeinsame Befülleitung 2 vorzusehen, während eine gesonderte Entnahmeleitung 2a für den Motor vorgesehen ist. Diese Ausgestaltung ist in Fig. 4 dargestellt. Aus dieser Figur ist auch ersichtlich, daß die schnelle Befüllung der Gasflaschen 4 auch alleine über die Falschenventile 6 erfolgen kann, die hierzu den Flaschenventilen 3 gegenüberliegen bzw. an den anderen Flaschenenden angeordnet sind.

In der Fig. 5 ist eine vorteilhafte Anordnung von Gasflaschen 4 dargestellt, womit eine nahezu gleichmäßige Befüllung aller Gasflaschen 4 ohne größere Fülldruckdifferenzen erreicht wird. Wie ersichtlich, sind dabei die Gasflaschen zwischen der zweiten Befülleitung 7 und der kombinierten Füll- und Entnahmeleitung 2a wechselseitig derart angeordnet, daß jeweils wechselseitig ein Flaschenventil 3 mit einem Durchflußmengenbegrenzungsglied und ein Flaschenventil 6, das keine Durchflußverengung aufweist, nebeneinander angeordnet sind. Damit werden die Gasflaschen 4 jeweils von beiden Seiten aus befüllt.

Wie ersichtlich, wird auf diese Weise ein Druckabfall während der Befüllung zwischen der ersten und der letzten Gasflasche 4 vermieden. So werden z.B. die links außen dargestellte Flasche, als erste Flasche, ungedrosselt über die zweite Befülleitung 7 und das Flaschenventil 6 und gleichzeitig auch die rechts außen dargestellte, nämlich die letzte Flasche, über die kombinierte Füll- und Entnahmeleitung 2a und das zugehörige Flaschenventil 6 gleichzeitig mit dem gleichen Druck gefüllt.

## Patentansprüche

1. Vorrichtung zum Betanken von Gasflaschen (4) eines gasbetriebenen Omnibusses, die Vorrichtung bestehend aus Gasflaschen (4), aus einer Befülleitung (2), aus Zuleitungen, die zu den Gasflaschen (4) abgehen, und aus Flaschenventilen (3), die auf die Flaschen montiert sind, wobei die Ventile (3) Durchflußmengenbegrenzungsglieder aufweisen,
**dadurch gekennzeichnet**, daß
jede Gasflasche (4) mit einem zweiten Flaschenventil (6) versehen ist, über das sie mit der Befüllleitung (2) verbunden ist, wobei das zweite Flaschenventil (6) mit einem den Gasauslaß aus der Gasflasche (4) sperrenden Rückschlagglied versehen ist, wobei das zweite Flaschenventil (6) im wesentlichen zur Befüllung der dazugehörigen Gasflasche (4) und das Flaschenventil (3) mit dem Durchflußmengenbegrenzungsglied zur Entleerung vorgesehen ist.

2. Vorrichtung nach Anspruch 1,
**dadurch gekennzeichnet**, daß
von der Befülleitung (2) eine zweite Befülleitung abzweigt, die wenigstens zu einem Teil der Flaschenventile (6) mit den Rückschlaggliedern führt.

3. Vorrichtung nach Anspruch 1,
**dadurch gekennzeichnet**, daß
die Gasflaschen (4) mit den Flaschenventilen (3,6) derart angeordnet sind, daß sich eine Parallelanordnung der Gasflaschen (4) ergibt, wobei die Befüllung der Gasflaschen (4) aus der Befülleitung über die Flaschenventile (6) mit den Rückschlaggliedern und eine Gasentnahme über die Flaschenventile (3) mit den Durchflußmengenbegrenzungsgliedern erfolgt.

4. Vorrichtung nach Anspruch 2,
**dadurch gekennzeichnet**, daß
die Gasflaschen (4) mit den Flaschenventilen (3,6) derart zwischen der Befülleitung (2) und der zweiten Befülleitung (7) angeordnet sind, daß sich in der Befülleitung (2) und der zweiten Befülleitung die Lagen der Flaschenventile (3) mit den Durchflußmengenbegrenzungsgliedern und die Flaschenventile (6) mit den Rückschlagsgliedern abwechseln.

5. Vorrichtung nach einem der Ansprüche 1 bis 4,
**dadurch gekennzeichnet**, daß
die Flaschenventile (3,6) einer Gasflasche (4) gegenüberliegend angeordnet sind.

## Claims

1. A device for refuelling gas bottles (4) of a gas-driven bus, the device comprising gas bottles (4), a filling line (2), delivery lines running out from the gas bottles (4) and bottle valves (3) mounted on the bottles, the valves (3) having members for limiting the flow rate,
**characterised in that**
each gas bottle (4) is provided with a second bottle valve (6) by means of which it is connected to the filling line (2), wherein the second bottle valve (6) is provided with a flashback member which shuts off the gas outlet from the gas bottle (4), the second bottle valve (6) being provided essentially for filling the associated gas bottle (4) and the bottle valve (3) with the member for limiting the flow rate being provided for emptying purposes.

2. A device as claimed in claim 1,
**characterised in that**
branching off from the filling line (2) is a second filling line, which leads at least to a part of the bottle valves (6) with the flashback members.

3. A device as claimed in claim 1,
**characterised in that**
the gas bottles (4) with the bottle valves (3, 6) are arranged so as to produce a parallel layout of the gas bottles (4), the gas bottles (4) being filled from the filling line via the bottle valves (6) with the flashback members and gas being drawn off via the bottle valves (3) with the members for limiting the flow rate.

4. A device as claimed in claim 2,
**characterised in that**
the gas bottles (4) having the bottles valves (3, 6) are so arranged between the filling line (2) and the second filling line (7) that the positions in the filling line (2) and the second filling line of the bottle valves (3) with the members for limiting the flow rates and the bottle valves (6) with the flashback members can be alternated.

5. A device as claimed in one of claims 1 to 4,
**characterised in that**
the bottle valves (3, 6) of a gas bottle (4) are arranged lying opposite one another.

## Revendications

1. Dispositif de remplissage de bouteilles à gaz (4) d'un omnibus propulsé au gaz, le dispositif étant constitué de bouteilles à gaz (4), d'une conduite de remplissage (2), de conduites d'amenée qui partent vers les bouteilles à gaz (4) et de soupapes à bouteilles (3) montées sur les bouteilles, les soupapes (3) présentant des organes de limitation de débit, caractérisé en ce que chaque bouteille à gaz (4) est dotée d'une deuxième soupape à bouteille (6), par l'intermédiaire de laquelle elle est reliée à la conduite de remplissage (2), la deuxième soupape à bouteille (6) est dotée d'un organe anti-retour bloquant l'échappement de gaz partant de la bouteille à gaz (4), la deuxième soupape à bouteille (6) étant prévue essentiellement pour effectuer le remplissage de la bouteille à gaz (4) afférente et la soupape à bouteille (3) dotée de l'organe de limitation de débit, étant prévue pour effectuer le vidage.

2. Dispositif selon la revendication 1, caractérisé en ce que part, de la conduite de remplissage (2), une deuxième conduite de remplissage qui mène au moins à une partie des soupapes à bouteille (6) dotées des organes anti-retour.

3. Dispositif selon la revendication 1, caractérisé en ce que les bouteilles à gaz (4), équipées des soupapes à bouteille (3, 6), sont disposées de manière à obtenir un branchement parallèle des bouteilles à gaz (4), le remplissage des bouteilles à gaz (4) depuis la conduite de remplissage s'effectuant par l'intermédiaire des soupapes à bouteille (6) équipées des organes anti-retour, et le prélèvement de gaz s'effectuant par les soupapes à bouteilles (3) équipés des organes de limitation de débit.

4. Dispositif selon la revendication 2, caractérisé en ce que les bouteilles à gaz (4) équipées des soupapes à gaz (3, 6) sont disposées, entre la conduite de remplissage (2) et la deuxième conduite de remplissage (7), de manière à ce que, dans la conduite de remplissage (2) et dans la deuxième conduite de remplissage, les positions des soupapes à bouteille (3), ayant les organes de limitation de débit, et des soupapes à bouteille (6), équipées des organes anti-retour, alternent.

5. Dispositif selon l'une des revendications 1 à 4, caractérisé en ce que les soupapes à bouteille (3, 6) d'une bouteille de gaz (4) sont disposées à l'opposé les unes des autres.
